Europäisches Patentamt

(19) European Patent Office

Office européen des brevets

(11) **EP 0 942 542 B1**

(12) **FASCICULE DE BREVET EUROPEEN**

(45) Date de publication et mention
de la délivrance du brevet:
**23.04.2003 Bulletin 2003/17**

(51) Int Cl.7: **H04B 7/216**, H04B 1/707

(21) Numéro de dépôt: **99400459.6**

(22) Date de dépôt: **25.02.1999**

(54) **Procédé de démodulation de signaux représentatifs de séquences émises dans un système de communications**

Verfahren zur Signaldemodulation von Übertragenen Sequenzen in einem Übertragungssystem

Method of signal demodulation for transmitted sequences in a communication system

(84) Etats contractants désignés:
**DE ES FR GB IT**

(30) Priorité: **13.03.1998 FR 9803389**

(43) Date de publication de la demande:
**15.09.1999 Bulletin 1999/37**

(73) Titulaire: **Mitsubishi Electric Information
Technology Centre Europe B.V.
1119 NS Schiphol Rijk (NL)**

(72) Inventeurs:
• **Voyer, Nicolas
35700 Rennes (FR)**
• **MURAI Hideshi
Kanagawa 247 (JP)**

(74) Mandataire: **Maillet, Alain
SCP Le Guen & Maillet,
5, Place Newquay,
B.P. 70250
35802 Dinard Cedex (FR)**

(56) Documents cités:
**WO-A-95/22859        US-A- 5 442 627**

**Description**

La présente invention concerne un procédé démodulation de signaux représentatifs de séquences émises dans un système de communications, par exemple, un système de communications à étalement de spectre utilisant une modulation orthogonale ou bi-orthogonale. Un tel système de communication est par exemple un système de communication à accès multiple, tel qu'un système téléphonique sans fil ou un système de communication du type répéteur de satellite. Par exemple, la présente invention s'applique à un système de communications qui utilise la technique à accès multiple et à division par code CDMA (Code Division Multiple Access).

Un système de communications à étalement de spectre auquel le procédé de l'invention s'applique est connu et est par exemple du type de celui qui est décrit dans le document de brevet US-A-5 602 833. Comme on l'a représenté à la Fig. 1, un tel système est essentiellement constitué, côté émission, d'un codeur 10, d'un modulateur 20 et d'une unité d'émission 30 sur un canal 40. Côté réception, il est constitué d'une unité de réception 50, d'un démodulateur 60 dual du modulateur 20 et d'un décodeur 70 dual du codeur 10. Généralement, de tels systèmes comprennent également un entrelaceur 15 qui est situé entre le codeur 10 et le modulateur 20 ainsi qu'un désentrelaceur 65 dual de l'entrelaceur 15 et situé entre le démodulateur 60 et le décodeur 70.

Le codeur 10 ainsi que l'entrelaceur 15 sont connus dans l'état de la technique et sont prévus pour coder avec répétition et entrelacement un train de bits entrant représentatif de signaux de voix, de données ou autres, par exemple préalablement amplifiés, filtrés et numérisés. Ce codage est du type qui permet la mise en oeuvre de fonctions de détection et de correction d'erreurs. Associé à un traitement d'entrelacement, ce codage permet également au système de fonctionner à des rapports de signal sur bruit et de signal d'interférence faibles. Les signaux résultant du codage et de l'entrelacement sont une suite de mots ou symboles k-aires constitués de k éléments généralement notés 1 et -1 (ou 0 et 1).

Cette suite de symboles subit, dans le modulateur 20, une modulation dite modulation orthogonale ou une modulation dite bi-orthogonale.

Dans le cas d'une modulation orthogonale, le modulateur 20 comprend un générateur 21 de mots orthogonaux les uns aux autres. De tels mots sont également appelés séquences ou fonctions. Dans la suite de la description, ils seront désignés par le terme de fonctions.

Ces fonctions peuvent être des fonctions de Walsh, lesquelles sont engendrées, à partir de matrices de Walsh, également connues sous le nom de matrices d'Hadamard. On rappelle que les matrices de Hadamard sont des matrices qui sont engendrées de manière récursive telle qu'une matrice de fonctions d'ordre n peut s'écrire :

$$W(n) = \begin{vmatrix} W(n/2) & W(n/2) \\ W(n/2) & \overline{W(n/2)} \end{vmatrix}$$

où $\overline{W}$ représente le complément logique de la matrice $W$. De plus, la matrice de dimension 1, $W(1)$, est égale à 1.

Chaque colonne ou ligne d'une matrice $W(n)$ d'ordre $n$ est appelée une fonction de Walsh et est notée $S_p(n)$ où $p$ est le numéro de colonne ou de ligne de la fonction considérée et $n$ est la dimension de la fonction. Elle sera plus simplement notée également $S_p$.

Par exemple, la matrice de Walsh de dimension 8 s'écrit de la manière suivante :

$$W(8) = \begin{bmatrix} 1 & 1 & 1 & 1 & 1 & 1 & 1 & 1 \\ 1 & -1 & 1 & -1 & 1 & -1 & 1 & -1 \\ 1 & 1 & -1 & -1 & 1 & 1 & -1 & -1 \\ 1 & -1 & -1 & 1 & 1 & -1 & -1 & 1 \\ 1 & 1 & 1 & 1 & -1 & -1 & -1 & -1 \\ 1 & -1 & 1 & -1 & -1 & 1 & -1 & 1 \\ 1 & 1 & -1 & -1 & -1 & -1 & 1 & 1 \\ 1 & -1 & -1 & 1 & -1 & 1 & 1 & -1 \end{bmatrix}$$

Toujours à titre d'exemple, la séquence $S_4$ s'écrit {1,-1,-1,1,1,-1,-1,1}.

On notera que l'on a utilisé les éléments 1 et -1 mais que l'on pourrait respectivement utiliser les éléments 0 et 1.

Une modulation numérique consiste à attribuer à chaque symbole p possible issu de l'entrelaceur 15, une séquence à émettre $SE_p$. Dans le cas de la modulation orthogonale, les séquences attribuées $SE_p$ correspondent aux fonctions de Walsh $S_p(n)$. Ainsi, des symboles de trois bits pourront être modulés au moyen de fonctions de Walsh de dimension 8 et de manière générale, des symboles à k bits seront modulés au moyen de N ($=2^k$) séquences $SE_p$ de dimension n ($= 2^k$).

Par exemple, pour des symboles d'entrée à deux bits, on donne dans le tableau I ci-dessous la liste des séquences émises $SE_p$ correspondantes attribuées par le modulateur 20.

TABLE I

| Symbole d'entrée | Séquence attribuée |
|---|---|
| 1 1 | $SE_1=S_1(4)=\{1,1,1,1\}$ |
| -1 1 | $SE_2=S_2(4) = \{1,-1,1,-1\}$ |
| 1 -1 | $SE_3=S_3(4)=\{1,1,-1,-1\}$ |
| -1 -1 | $SE_4=S_4(4) = \{1,-1,-1,1\}$ |

Quant à la modulation bi-orthogonale, elle consiste à attribuer à un symbole d'entrée p une séquence $SE_p$ correspondant, soit à une fonction orthogonale, par exemple une fonction de Walsh $S_q$ de dimension n = $2^{k-1}$ quand le dernier élément ($k^{\text{ième}}$ élément) est dans un premier état, soit au complément logique de cette fonction $S_q$ de même dimension n quand le dernier élément ($k^{\text{ième}}$ élément) est dans un second état. De manière générale, des symboles à k bits seront modulés au moyen de N ($=2^k$) séquences $SE_p$ de longueur n (= $2^{k-1}$). La modulation bi-orthogonale est par exemple décrite dans le document de brevet européen EP-A-809 364.

Par exemple, pour des symboles d'entrée à deux bits, on donne dans le tableau II ci-dessous la liste des séquences correspondantes attribuées par le modulateur 20.

TABLE II

| Symbole d'entrée | Séquence attribuée |
|---|---|
| 1 1 | $SE_1=S_1(2)=\{1,1\}$ |
| -1 1 | $SE_2=S_2(2)=\{1,-1\}$ |
| 1 -1 | $SE_3=-S_1(2)=\{-1,-1\}$ |
| -1 -1 | $SE_4=-S_2(2)=\{-1,1\}$ |

Les séquences $SE_p$ attribuées lors de la modulation orthogonale ou bi-orthogonale sont ensuite traitées puis transmises par l'unité d'émission 30. Elles sont transmises, via le canal 40, à l'unité de réception 50, puis au démodulateur 60 respectivement dual de l'unité d'émission 30 et du modulateur 20.

Le procédé de démodulation mis en oeuvre dans le démodulateur 60 consiste par conséquent à recouvrer, dans le signal transmis par l'unité de réception 50, la séquence $SE_p$ utilisée lors de la modulation, puis à recouvrer, à partir de cette séquence, le symbole p modulé.

Plusieurs procédés peuvent être mis en oeuvre.

Le premier consiste à sélectionner la séquence dont la valeur de corrélation entre le signal transmis par l'unité de réception 50 et la fonction correspondante est la plus forte. Elle consiste donc à choisir la séquence $SE_p$ dont la probabilité qu'elle ait été émise soit la plus forte. La séquence $SE_p$ étant choisie, le symbole p associé à cette séquence est ensuite recouvré et fourni au désentrelaceur 65 puis au décodeur 70.

Le décodeur 70 est, par exemple, un décodeur du type à maximum de vraisemblance, par exemple tel que celui qui a été décrit par A.J. Viterbi dans un article paru dans IEEE Transactions on Communication Technology d'octobre 1971 et intitulé « Convolutional codes and their performance in communication systems ».

Cette méthode est dite, dans le domaine de la technique, Hard Decision Method (Méthode de décision dure).

Une autre méthode dite Soft Decision Method (Méthode de décision souple) consiste à déterminer, à partir des valeurs de corrélation obtenues par corrélation entre le signal transmis par l'unité de réception 50 et chacune des fonctions susceptibles d'avoir été utilisées lors de la modulation, une valeur de confiance pour chaque séquence $SE_1$ à $SE_N$ associée à chacune desdites fonctions. Il consiste encore à déduire de cet ensemble de valeurs de confiance, une valeur de décision souple à attribuer à chaque élément du symbole p démodulé. Le symbole démodulé alors constitué de chacune de ces valeurs de décision est ensuite, comme précédemment fourni au désentrelaceur 65 puis au décodeur 70.

On peut montrer que la formulation théorique de cet ensemble de valeurs de décision souple prises selon le critère de maximum de vraisemblance est donnée de manière générale par la relation suivante :

$$L(\hat{u}_k) = \ln \frac{\sum\limits_{\forall x\_pour\_lequel\_u_i=+1} P(SE_x|y)}{\sum\limits_{\forall x\_pour\_lequel\_u_i=-1} P(SE_x|y)}$$

où P(x|y) représente la probabilité, sachant que le signal y a été reçu, de décider que la séquence $SE_x$ avait été émise, et $u_i$ est l'élément d'ordre i du symbole x correspondant à la séquence $SE_x$ considérée.

Un procédé de démodulation qui appliquerait telle quelle cette formulation aurait l'inconvénient de nécessiter, pour son calcul, de nombreuses opérations mathématiques relativement longues à mettre en oeuvre. Par ailleurs, on peut montrer que les valeurs optimales de décision souple nécessitent la connaissance préalable du comportement statistique du canal de transmission, par exemple le rapport signal sur bruit, ou bien encore le comportement statistique de ce rapport (loi de Gauss, de Rice, de Rayleigh...).

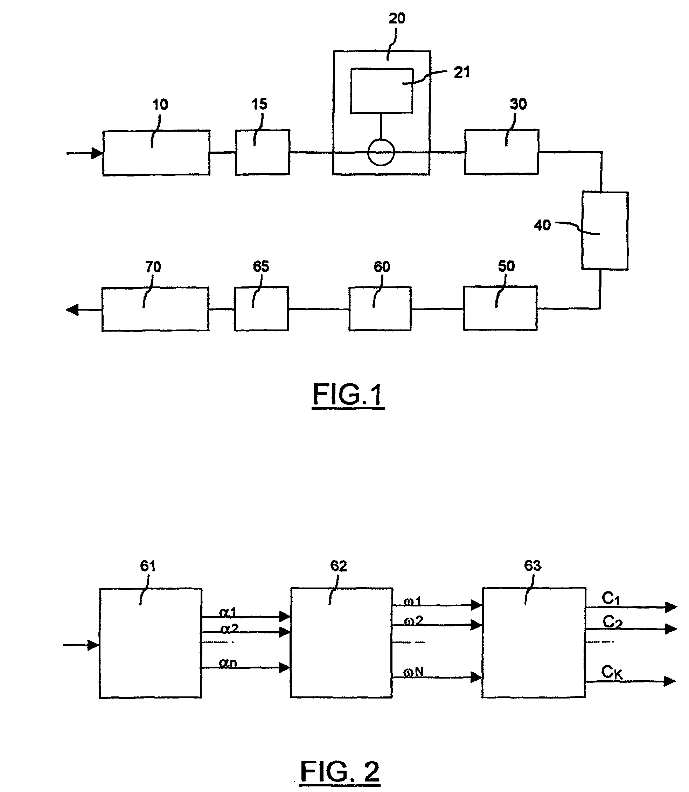

Le document de brevet US-A-5 442 627 décrit un démodulateur qui a pour objet de résoudre ces problèmes. Un tel démodulateur est représenté à la Fig. 2.

Il est essentiellement constitué de moyens de corrélation 61 qui reçoivent les signaux issus de l'unité de réception 50, lesquels se présentent sous la forme d'échantillons de données. Ces moyens de corrélation 61 sont par exemple constitués de moyens de calcul d'une transformée de Hadamard rapide (dite Fast Hadamard Transform ou F.H.T dans le domaine de la technique) ou des moyens de calcul de corrélation. Ils délivrent, pour chaque fonction de Walsh $S_1$ à $S_n$ susceptible d'avoir été utilisée lors de la modulation, une valeur $\alpha_I$ à $\alpha_n$ de corrélation avec le signal présent.

Ces moyens 61 sont suivis de moyens 62 qui permettent de déterminer une valeur de confiance qui correspond à la portion d'énergie $w_1$ à $w_N$ du signal reçu associée à chaque séquence $SE_1$ à $SE_N$ susceptible d'avoir été émise. Pour chaque séquence $SE_p$ égale à une fonction $S_p$, la portion d'énergie $w_p$ associée à ladite séquence est généralement calculée dans les moyens 62 comme étant le carré de la valeur de corrélation $\alpha_p$ avec ladite fonction ($w_p = \alpha_p{}^2$).

Le démodulateur comprend ensuite des moyens de calcul de métriques 63 qui déterminent, sur la base de l'ensemble des valeurs $w_1$ à $w_N$ délivrées par les moyens de corrélation 62, l'ensemble des valeurs de décision souple (Soft Decision Value) $C_1$ à $C_k$ et les attribuent respectivement aux éléments $u_1$ à $u_k$ du symbole démodulé.

Ainsi, chaque valeur de décision souple est donnée par la relation suivante :

$$C_i = \max_{p\_pour\_lequel\_u_i=+1}(w_p) \quad - \quad \max_{p'\_pour\_lequel\_u_i=-1}(w_{p}')$$

dans laquelle la première fonction max correspond à la plus élevée des portions d'énergie $w_p$ des séquences $SE_p$ pour lesquelles les symboles démodulés p correspondants ont l'élément $u_i$ égal à +1 et la seconde fonction max correspond à la plus élevée des portions d'énergie $w_{p'}$ des séquences $SE_{p'}$ pour lesquelles les symboles démodulés p' correspondant ont l'élément $u_i$ égal à -1.

Un des inconvénients d'une telle méthode résulte dans le fait qu'elle n'est pas directement applicable à la modulation bi-orthogonale. En effet, dans le cas de la modulation bi-orthogonale, les moyens 61 précédents (transformée de Hadamard rapide F.H.T ou moyens de calcul de corrélation entre le signal présent en sortie de l'unité de réception 50 et chaque séquence de Walsh) ne sont pas applicables tel quels.

Le but de la présente invention est donc de prévoir un procédé de démodulation dont la complexité de mise en oeuvre est relativement aussi faible que celui qui vient d'être décrit et qui puisse, d'une part, tenir compte de tous les éléments des symboles démodulés et, d'autre part, être appliquée aussi bien à la modulation orthogonale qu'à la modulation biorthogonale.

Pour atteindre ce but, un procédé de démodulation selon l'invention est caractérisé en ce qu'il consiste :

à déterminer une valeur de corrélation entre chaque fonction orthogonale susceptible d'avoir été utilisée lors du processus de modulation et les signaux à démoduler,
à déduire desdites valeurs de corrélation une valeur de confiance attribuée à chaque séquence susceptible d'avoir été émise, ladite valeur de confiance étant calculée de la manière suivante :

si, le symbole associé à ladite séquence a son dernier élément qui est dans un premier état, ladite valeur est, soit égale au carré de la valeur de corrélation entre le signal à démoduler et la fonction utilisée pour ladite séquence si ladite valeur de corrélation est positive, soit nulle si ladite valeur de corrélation est négative,
si, le symbole associé à ladite séquence a son dernier élément qui est dans un second état, ladite valeur est, soit nulle si ladite valeur de corrélation est positive, soit égale au carré de la valeur de corrélation entre le signal issu dudit récepteur et ladite séquence si ladite valeur de corrélation est négative,
à déduire desdites valeurs de confiance lesdites valeurs de décision souple à attribuer à chaque élément du symbole démodulé.

Par ailleurs, on a prévu un procédé tel que la détermination des valeurs de décision souple permette, contrairement au procédé décrit ci-dessus, de prendre complètement en compte les valeurs de confiance de tous les éléments du symbole démodulé. Ainsi, selon une autre caractéristique de l'invention, la valeur de décision à attribuer à un élément du symbole démodulé est calculée comme étant égale à la somme de toutes les valeurs de confiance attribuées aux séquences associées aux symboles dont ledit élément est égal à une première valeur à laquelle est ôtée la somme de toutes les valeurs de confiance associées aux séquences correspondant aux symboles dont ledit élément est égal à une seconde valeur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 est un schéma synoptique d'un système de communications auquel la présente invention s'applique, et
la Fig. 2 est un schéma synoptique d'un démodulateur pour la mise en oeuvre d'un procédé de démodulation selon la présente invention.

Un démodulateur qui exploite le procédé de démodulation selon l'invention est essentiellement constitué, comme celui de l'art antérieur représenté à la Fig. 2, de moyens de corrélation 61 qui reçoivent les signaux issus d'une unité de réception 50 et qui délivrent des valeurs $\alpha_1$ à $\alpha_n$ de corrélation de ces signaux d'entrée avec les n fonctions orthogonales (par exemple des fonctions de Walsh) $S_1$ à $S_n$ susceptibles d'avoir été utilisées lors de la modulation. Ces valeurs de corrélation sont transmises à des moyens 62 qui délivrent à des moyens 63 de calcul de métriques des valeurs de confiance $w_1$ à $w_N$ respectivement associées à chaque séquence susceptible d'avoir été émise $SE_1$ à $SE_N$. Les valeurs de confiance $w_1$ à $w_N$ représentent la portion d'énergie associée à chaque séquence $SE_1$ à $SE_N$.

Pour qu'un démodulateur selon l'invention puisse fonctionner alors que la modulation opérée côté émetteur a été une modulation bi-orthogonale, il diffère de ceux qui sont connus essentiellement par le procédé qui est mis en oeuvre dans les moyens 62 de calcul de portion d'énergie $w_p$ associée à chaque séquence $SE_p$ susceptible d'avoir été émise. Ce procédé est maintenant décrit.

On va considérer un symbole p comprenant k éléments $u_i$ avec i variant de 1 à k. La séquence émise correspondant à ce symbole est la séquence notée $SE_p$. Si ce symbole a été modulé par modulation bi-orthogonale, deux cas se présentent. Dans le premier cas, son dernier élément (k$^{\text{ième}}$ élément), noté $u_k$, est dans un premier état (par exemple +1) et la séquence émise $SE_p$ correspond à une fonction de Walsh, notée $S_q$.

Dans le second cas, son k$^{\text{ième}}$ élément est dans un second état (par exemple -1), la séquence émise $SE_p$ correspond au complément logique $\overline{S_q}$ de la même fonction de Walsh $S_q$.

Dans le premier cas, selon l'invention, la valeur de confiance ou portion d'énergie $w_p$ associée à la séquence $SE_p$ est, soit égale au carré de la valeur de corrélation $\alpha_q$ ($w_p = \alpha_q^2$) entre le signal d'entrée et la fonction de Walsh $S_q$ correspondant à cette séquence $SE_p$ si cette valeur de corrélation $\alpha_q$ est positive, soit, si la valeur de corrélation $\alpha_q$ est négative, égale à zéro ($w_p = 0$).

Dans le second cas, la valeur de confiance $w_p$ associée à la séquence est, soit égale au carré de la valeur de corrélation $\alpha_q$ ($w_p = \alpha_q^2$) entre le signal d'entrée et la fonction de Walsh $S_q$ correspondant à cette séquence $SE_p$ si cette valeur de corrélation $\alpha_q$ est négative, soit, si la valeur de corrélation $\alpha_q$ est positive, égale à zéro ($w_p = 0$).

Par exemple, si l'on considère une modulation bi-orthogonale selon le tableau II ci-dessus, on aura deux valeurs de corrélation respectivement $\alpha_1$ et $\alpha_2$. Le tableau III ci-dessous donne les valeurs des portions d'énergie $w_1$ à $w_4$ correspondant à ces deux valeurs $\alpha_1$ et $\alpha_2$ quand celles-ci sont positives.

TABLE III

| Symbole d'entrée | Portion d'énergie |
|---|---|
| 1 1 | $w_1 = \alpha_1^2$ |
| -1 1 | $w_2 = \alpha_2^2$ |
| 1 -1 | $w_3 = 0$ |
| -1 -1 | $w_4 = 0$ |

Quant au tableau IV ci-dessous, il donne la valeur des portions d'énergie $w_1$ à $w_4$ correspondant à ces deux valeurs $\alpha_1$ et $\alpha_2$, la première étant, à titre d'exemple, positive alors que la seconde est négative.

TABLE IV

| Symbole d'entrée | Portion d'énergie |
|---|---|
| 1 1 | $w_1 = \alpha_1^2$ |
| -1 1 | $w_2 = 0$ |
| 1 -1 | $w_3 = 0$ |
| -1 -1 | $w_4 = \alpha_2^2$ |

Selon une autre caractéristique de l'invention, la valeur de confiance $w_p$ associée à la séquence $SE_p$ est calculée comme précédemment mais pondérée par un facteur, noté $m$ qui est fonction de l'ensemble des valeurs de corrélation $\alpha_1$ à $\alpha_n$. Avantageusement, la valeur du facteur de pondération m est donnée par la relation :

$$m = 1 \Big/ \sqrt{\sum_{j=1}^{n} \alpha_j^2}$$

Les moyens de métriques 63 qui sont prévus pour délivrer k = $Log_2$(N) valeurs de décision souple $C_1$ à $C_k$ associées à chaque élément du symbole démodulé peuvent être du type de ceux qui sont été décrits précédemment. On rappelle que la valeur de décision souple $C_i$ associée à l'élément $u_i$ du symbole démodulé est alors donnée par la relation suivante :

$$C_i = \max_{p\_pour\_lequel\_u_i = +1}(w_p) - \max_{p'\_pour\_lequel\_u_i = -1}(w_p')$$

Par exemple, dans le cas décrit dans le tableau III ci-dessus, et si la valeur absolue de $\alpha_1$ est supérieure à celle de $\alpha_2$, on aurait :

$$C_1 = w_1 - 0 = w_1$$

et,

$$C_2 = w_1 - w_2$$

De même, dans le cas décrit dans le tableau IV ci-dessus, et si la valeur absolue de $\alpha_1$ est supérieure à celle de $\alpha_2$, on aurait :

$$C_1 = w_1 - w_4$$

*et,*

$$C_2 = w_1 - w_4$$

Néanmoins, comme cela a déjà été mentionné ci-dessus, ce calcul des métriques ne tient pas compte de tous les éléments $u_i$ du symbole démodulé puisqu'il opère un choix.

Ainsi, pour pouvoir tenir compte de tous les symboles, selon une variante de réalisation de l'invention, les moyens de métriques 63 sont tels que la valeur calculée de décision $C_i$ associée au i^ème élément $u_i$ du symbole démodulé est égale à la somme des portions d'énergie $w_i$ associées aux séquences susceptibles d'avoir été émises pour lesquelles ledit i^ème élément $u_i$ du symbole correspondant est égal à une première valeur (par exemple + 1) à laquelle on ôte la somme des portions d'énergie $w_i$ associées aux séquences susceptibles d'avoir été émises pour lesquelles ledit i^ème élément $u_i$ du symbole correspondant est égal à une seconde valeur (par exemple - 1)

Mathématiquement, cette définition peut s'écrire:

$$C_i = \sum_{Pour\_tous\_p\_pour\_lesquels\_u_i = +1} (w_p) - \sum_{Pour\_tous\_p'\_pour\_lesquels\_u_i = -1} (w_{p'})$$

Ce calcul de métrique est maintenant basé sur une somme pondérée des valeurs de confiance, plutôt que sur une sélection des valeurs les plus fortes.

Par exemple, dans le cas décrit dans le tableau III ci-dessus, on aurait :

$$C_1 = (w_1 + w_2) - 0$$

$$C_2 = w_1 - w_2$$

De même, dans le cas décrit dans le tableau IV ci-dessus, on aurait :

$$C_1 = w_1 - w_2$$

$$C_2 = w_1 - w_2$$

On notera que, dans le cas de modulation orthogonale, des moyens 63 tels qu'ils viennent d'être décrits pourraient être utilisés. Les valeurs de portion d'énergie $w_p$ seraient alors égales à $\alpha^2_p$ et l'on aurait alors, pour chaque élément $u_i$ du symbole démodulé, la valeur de décision $C_i$ qui, comme précédemment, s'écrirait :

$$C_i = \sum_{Pour\_tous\_p\_pour\_lesquels\_u_i = +1} (w_p) - \sum_{Pour\_tous\_p'\_pour\_lesquels\_u_i = -1} (w_{p'})$$

**Revendications**

**1.** Procédé de démodulation de signaux représentatifs de séquences ($SE_1$ à $SE_N$) émises dans un système de communications, chaque séquence ($SE_1$ à $SE_N$) susceptible d'être émise étant le résultat d'une modulation bi-orthogonale qui associe à un symbole (p), soit une fonction orthogonale ($S_1$ à $S_n$) si ledit symbole (p) a son dernier élément ($u_k$) qui est dans un premier état, soit le complément logique de ladite fonction orthogonale ($S_1$ à $S_n$) si ledit symbole (p) a son dernier élément ($u_k$) qui est dans un second état, ledit procédé étant prévu pour déterminer chacune des valeurs de décision souple ($C_1$ à $C_k$) à attribuer à chaque élément du symbole démodulé au vu d'un décodage subséquent du type à maximum de vraisemblance, **caractérisé en ce qu'**il consiste :

à déterminer une valeur de corrélation ($\alpha_1$ à $\alpha_n$) entre chaque fonction orthogonale ($S_1$ à $S_n$) susceptible d'avoir été utilisée lors du processus de modulation et les signaux à démoduler,

à déduire desdites valeurs de corrélation ($\alpha_1$ à $\alpha_n$) une valeur de confiance ($w_1$ à $w_N$) attribuée à chaque séquence ($SE_1$ à $SE_N$) susceptible d'avoir été émise, ladite valeur de confiance ($w_1$ à $w_N$) étant calculée de la manière suivante :

si, le symbole (p) associé à ladite séquence ($SE_p$) a son dernier élément ($u_k$) qui est dans un premier état, ladite valeur ($w_p$) est, soit égale au carré de la valeur de corrélation ($\alpha_q$) entre le signal à démoduler et la fonction ($S_q$) utilisée pour ladite séquence ($SE_p$) si ladite valeur de corrélation ($\alpha_q$) est positive, soit nulle si ladite valeur de corrélation ($\alpha_q$) est négative,

si, le symbole (p) associé à ladite séquence ($SE_p$) a son dernier élément ($u_k$) qui est dans un second état, ladite valeur ($w_p$) est, soit nulle si la valeur de corrélation ($\alpha_q$) entre le signal à démoduler et la fonction ($S_q$) utilisée pour ladite séquence ($SE_p$) est positive, soit égale au carré de la valeur de corrélation ($\alpha_q$) si ladite valeur de corrélation ($\alpha_q$) est négative,

à déduire desdites valeurs de confiance ($w_1$ à $w_N$) lesdites valeurs de décision souple ($C_1$ à $C_k$) à attribuer à chaque élément du symbole démodulé.

2. Procédé selon la revendication 1, **caractérisé en ce que** la valeur de décision ($C_i$) à attribuer à un élément ($u_i$) du symbole démodulé est calculée comme étant égale à la somme de toutes les valeurs de confiance attribuées aux séquences ($SE_j$) associées aux symboles (p) dont ledit élément ($u_i$) est égal à une première valeur, somme à laquelle est ôtée la somme de toutes les valeurs de confiance ($w_j$) associées aux séquences ($SE_j$) correspondant aux symboles (p') dont ledit élément ($u_i$) est égal à une seconde valeur.

3. Procédé selon la revendication 2, **caractérisé en ce qu'**il consiste à multiplier, avant calcul des valeurs de décision, chaque valeur de confiance ($w_1$ à $w_N$) par un facteur de pondération ($m$) qui est fonction de l'ensemble des valeurs de corrélation ($\alpha_1$ à $\alpha_n$).

4. Procédé selon la revendication 3, **caractérisé en ce que** la valeur du facteur de pondération m est donnée par la relation :

$$m = \dfrac{1}{\sqrt{\displaystyle\sum_{j=1}^{n} \alpha_j^2}}$$

où $\alpha_j$ représente la valeur de corrélation associée à la fonction orthogonale $S_j$.

**Claims**

1. A process for the demodulation of signals representative of sequences ($SE_1$ to $SE_N$) transmitted in a communications system, each sequence ($SE_1$ to $SE_N$) capable are capable of being transmitted being the result of a bi-orthogonal modulation which associates to a symbol (p) either an orthogonal function ($S_1$ to $S_n$) if the said symbol (p) has its last element ($u_k$) which is in a first state, or the logical complement of the said orthogonal function ($S_1$ to $S_n$), if the said symbol (p) has its last element ($u_k$) which is in a second state, the said process being provided in order to determine each of the soft decision values ($C_1$ to $C_k$) to be attributed to each element of the demodulated symbol, with a view to subsequent decoding of the maximum probability type, **characterised in that** it consists of

-    determining a correlation value ($\alpha_1$ to $\alpha_n$) between each orthogonal function ($S_1$ to $S_n$) that could have been used during the modulation process, and the signals to be demodulated;

- deducting from the said correlation values ($\alpha_1$ to $\alpha_n$) a confidence value ($w_1$ to $w_n$) attributed to each sequence ($SE_1$ to $SE_N$) that could have been transmitted, the said confidence value ($w_1$ to $W_N$) being calculated in the following manner:

  - if the symbol (p) associated with the said sequence ($SE_p$) has its last element ($u_k$) which is in a first state, the said value ($w_p$) is either equal to the square of the correlation value ($\alpha_q$) between the signal to be demodulated and the function ($S_q$) used for the said sequence ($SE_p$) if the said correlation value ($\alpha_q$) is positive, or zero if the said correlation value ($\alpha_q$) is negative;

  - if the symbol (p) associated with the said sequence ($SE_p$) has its last element ($u_k$) which is in a second state, the said value ($w_p$) is either zero if the correlation value ($\alpha_q$) between the signal to be demodulated and the function ($S_q$) used for the said sequence ($SE_p$) is positive, or equal to the square of the correlation value ($\alpha_q$) if the said correlation value ($\alpha_q$) is negative;

- deducting from the said confidence values ($w_1$ to $w_N$) the said soft decision values ($C_1$ to $C_k$) to be attributed to each element of the demodulated symbol.

2. A process according to Claim 1, **characterised in that** the decision value ($C_1$) to be attributed to an element ($u_i$) of the demodulated symbol is calculated as being equal to the sum of all the confidence values attributed to the sequences ($SE_j$) associated with the symbols (p), of which the said element ($u_i$) is equal to a first value, the sum from which is taken off the sum of all the confidence values ($w_j$) associated with the sequences ($SE_j$) corresponding to the symbols (p') of which the said element ($u_i$) is equal to a second value.

3. A process according to Claim 2, **characterised in that** it consists of multiplying, prior to the calculation of the decision values, each confidence value ($w_1$ to $w_N$) by a weighting factor (m) which is a function of the whole of the correlation values ($\alpha_1$ to $\alpha_n$).

4. A process according to Claim 3, **characterised in that** the value of the weighting factor is given by the formula:

$$m = \frac{1}{\sqrt{\sum_{j=1}^{n} \alpha_j^2}}$$

where $\alpha_j$ represents the correlation value associated with the orthogonal function $S_j$.

**Patentansprüche**

1. Verfahren zur Demodulation von Signalen, die repräsentativ sind für Sequenzen ($SE_1$ bis $SE_N$), die in einem Kommunikationssystem gesendet werden, wobei jede zur Sendung geeignete ($SE_1$ bis $SE_N$) das Ergebnis einer biorthogonalen Modulation ist, die mit einem Symbol (p) entweder eine orthogonale Funktion ($S_1$ bis $S_n$) verknüpft, wenn sich das letzte Element ($u_k$) des Symbols (p) in einem ersten Zustand befindet, oder die logische Ergänzung der orthogonalen Funktion ($S_1$ bis $S_n$) verknüpft, sich das letzte Element ($u_k$) des Symbols (p) in einem zweiten Zustand befindet, wobei das Verfahren bereitgestellt wird, um jeden der flexiblen Entscheidungswerte ($C_1$ bis $C_k$), die jedem Element des demodulierten Symbols zuzuweisen sind, in Anbetracht einer nachfolgenden Decodierung des Typs mit der größten Wahrscheinlichkeit zu bestimmen, **dadurch gekennzeichnet, dass** es aus folgenden Verfahrensschritten besteht:

Bestimmen eines Korrelationswerts ($\alpha_1$ bis $\alpha_n$) zwischen jeder orthogonalen Funktion ($S_1$ bis $S_n$), die eventuell bei dem Modulationsvorgang verwendet wurde, und den zu demodulierenden Signalen,
Abziehen eines Vertrauenswerts ($w_1$ bis $w_N$), der jeder Sequenz ($SE_1$ bis $SE_N$) zugewiesen wird, die eventuell gesendet wurde, von den Korrelationswerten, ($\alpha_1$ bis $\alpha_n$), wobei der Vertrauenswert ($w_1$ bis $w_N$) folgendermaßen berechnet wird:

wenn sich das letzte Element ($u_k$) des mit der Sequenz ($SE_p$) verknüpften Symbols (p) in einem ersten Zustand befindet, ist der Wert ($w_p$) entweder gleich dem Quadrat des Korrelationswerts ($\alpha_q$) zwischen dem zu demodulierenden Signal und der Funktion ($S_q$), die für die Sequenz ($SE_p$) verwendet wird, wenn der Korrelationswert ($\alpha_q$) positiv ist, oder gleich Null, wenn der Korrelationswert ($\alpha_q$) negativ ist, wenn sich das letzte Element ($u_k$) des mit der Sequenz ($SE_p$) verknüpften Symbols (p) in einem zweiten Zustand befindet, ist der Wert ($w_p$) entweder gleich Null, wenn der Korrelationswert zwischen dem zu demodulierenden Signal und der Funktion ($S_q$), die für die Sequenz ($SE_p$) verwendet wird, positiv ist, oder gleich dem Quadrat des Korrelationswertes ($\alpha_q$), wenn der Korrelationswert ($\alpha_q$) negativ ist,

Abziehen der flexiblen Entscheidungswerte ($C_1$ bis $C_k$) die jedem Element des demodulierten Symbols zuzuweisen sind, von den Vertrauenswerten ($w_1$ bis $w_N$).

2. Verfahren nach Anspruch 1, **dadurch gekennzeichnet, dass** der Entscheidungswert ($C_1$), der einem Element ($u_1$) des demodulierten Symbols zuzuweisen ist, so berechnet wird, dass er gleich der Summe aller Vertrauenswerte ist, die den Sequenzen ($SE_j$) zugewiesen werden, die mit den Symbolen (p) verknüpft sind, deren Element ($u_1$) gleich einem ersten Wert ist, wobei von dieser Summe die Summe aller Vertrauenswerte ($w_j$) abgezogen wird, die mit den Sequenzen ($SE_j$) verknüpft sind, die den Symbolen (p') entsprechen, deren Element ($u_i$) gleich einem zweiten Wert ist.

3. Verfahren nach Anspruch 2, **dadurch gekennzeichnet, dass** es darin besteht, vor der Berechnung der Entscheidungswerte jeden Vertrauenswert ($w_1$ bis $w_N$) mit einem Gewichtungsfaktor (m) zu multiplizieren, der von der Menge der Korrelationswerte ($\alpha_1$ bis $\alpha_n$) abhängig ist.

4. Verfahren nach Anspruch 3, **dadurch gekennzeichnet, dass** der Wert des Gewichtungsfaktors (m) durch die Bezeichnung

$$m = \dfrac{1}{\sqrt{\displaystyle\sum_{j=1}^{n} \alpha_j^2}}$$

gegeben ist, wobei $\alpha_j$ den Korrelationswert darstellt, der mit der orthogonalen Funktion $S_j$ verknüpft ist.

## FIG.1

## FIG. 2